Europäisches Patentamt

European Patent Office

Office européen des brevets

(19)

(11) Veröffentlichungsnummer : **0 191 777
B1**

(12)

# EUROPÄISCHE PATENTSCHRIFT

(45) Veröffentlichungstag der Patentschrift :
11.01.89

(21) Anmeldenummer : 85903200.5

(22) Anmeldetag : 10.07.85

(86) Internationale Anmeldenummer :
PCT/CH 85/00112

(87) Internationale Veröffentlichungsnummer :
WO/8601573 (13.03.86 Gazette 86/06)

(51) Int. Cl.4 : **F 16 H 25/20**

(54) LINEAR-ANTRIEBSVORRICHTUNG.

(30) Priorität : 24.08.84 CH 4050/84

(43) Veröffentlichungstag der Anmeldung :
27.08.86 Patentblatt 86/35

(45) Bekanntmachung des Hinweises auf die Patenterteilung : 11.01.89 Patentblatt 89/02

(84) Benannte Vertragsstaaten :
AT BE CH DE FR GB IT LI LU NL SE

(56) Entgegenhaltungen :
WO--A--83 /021 41
CH--A--   495 517
GB--A-- 1 266 132
GB--A-- 2 105 622

(73) Patentinhaber : LARS INTERNATIONAL S.A. LUXEM-
BOURG
Lavaterstrasse 61
CH-8002 Zürich (CH)

(72) Erfinder : FICKLER, Hans
Weidstrasse 18
CH-8542 Wiesendangen (CH)

(74) Vertreter : Lusuardi, Werther G.
Dr. Lusuardi AG Stockerstrasse 8
CH-8002 Zürich (CH)

## Beschreibung

Die Erfindung bezieht sich auf eine Linear-Antriebsvorrichtung mit zwei relativ zueinander fest angeordneten Motoren, von denen der eine eine Mutter, der andere eine Schraubspindel antreibt, wobei die von dem einen Motor angetriebene Mutter axial fest gehalten ist, während der andere Motor die Schraubspindel mit Hilfe eines drehfesten, aber axial verschiebbaren Kupplungsorgans antreibt.

Eine derartige Linear-Antriebsvorrichtung ist aus der GB-A-1 266 132 bekannt geworden. Soll eine derartige Linear-Antriebsvorrichtung schnelle Bewegungen mit kleinem Hub ausführen, was sich durch eine elektronische Steuerung der beiden Motoren erzielen lässt, so spielt die zu bewegende Masse eine Rolle.

Erfindungsgemäss lässt sich die hin und her bewegende Masse dadurch reduzieren, dass das Kupplungsorgan einen starren Antriebsteil und eine mit demselben verbundene, als Abtriebsteil dienende Membran umfasst. Mit einem solchen Kupplungsorgan, das zwar nur einen geringen Hub zulässt, beschränkt sich die axial zu bewegende Masse auf ein Minimum, da nur die Membran verformt wird.

In der Zeichnung sind einige Ausführungsbeispiele des Erfindungsgegenstandes vereinfacht dargestellt :

Figur 1 zeigt einen Axialschnitt einer Linear-Antriebsvorrichtung mit axial aufeinander ausgerichteten Motoren

Figur 2 einen Achsialschnitt einer Antriebsvorrichtung bei der die Motoren nebeneinander angeordnet sind

Figur 3 und 4 Achsialschnitte von Antriebsvorrichtungen mit achsial aufeinander ausgerichteten Motoren von denen einer eine Hohlwelle aufweist.

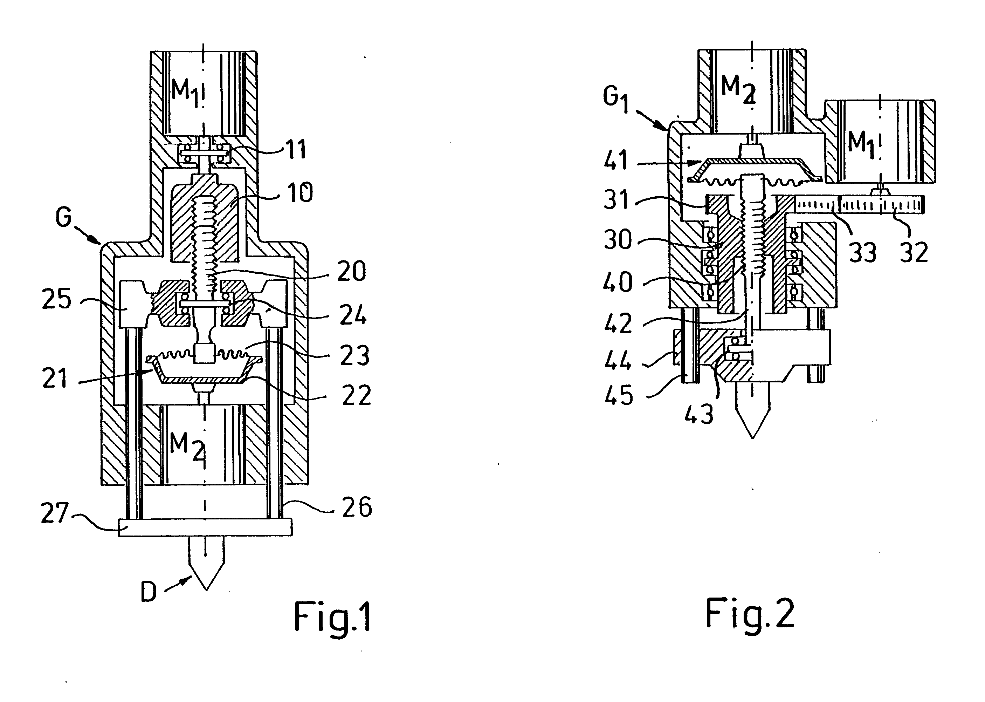

Die Linear-Antriebsvorrichtungen nach Figur 1 arbeitet mit zwei Motoren die in einem Gehäuse G angeordnet sind. Motor M1 treibt eine Mutter 10, Motor M2 eine Schraubspindel 20. Die Mutter 10 ist achsial fest aber drehbar gelagert. Sie ist dazu fest mit der Welle des Motors M1 verbunden und zusätzlich mittels des Achsiallagers 11 achsial gehalten.

Motor M2 treibt die Spindel 20 mit Hilfe eines achsial verschiebbaren Kupplungsorganes das als Ganzes mit 21 bezeichnet ist.

Im dargestellten Ausführungsbeispiel besteht dieses Kupplungsorgan aus einem tellerförmigen Antriebsteil 22 der mit der Welle des Motors M2 verbunden ist und eine am Rand des Teiles 22 befestigte ringförmig gewellte Membran 23. Die Membran dient als Antriebsteil und ist mit einer zentrisch angeordneten Nabe versehen, welche die Verbindung zur Schraubspindel 20 herstellt. In der durch die zulässige elastische Verformung bedingten Hub kann sich daher die Spindel 20 achsial verschieben.

Die achsiale Verschiebung oder Hub der Spindel findet unter gleichzeitiger Rotation derselben statt. Diese Bewegung wird mit Hilfe eines, über ein Achsiallager 24 mit einem achsial geführten Schlitten 25 nach Aussen aus dem Gehäuse herausgeführt die Aussen durch eine Traverse 27 miteinander verbunden sind.

Wie aus dem oben beschriebenen Aufbau der Antriebsvorrichtungen hervorgeht, erlaubt die Membran nur einen relativ kleinen Hub der Traverse 27. Natürlich könnte man den Hub vergrössern durch Verwendung eines Kupplungsorgans mit einer Kupplungshülse und einem darin achsial verschiebbaren Kernstück. Dies würde aber die Masse der zu bewegenden Teile vergrössern, was bei raschen Hin- und Herbewegungen nachteilig ist.

Die Antriebsvorrichtung findet nämlich Verwendung bei einer Werkzeugmaschine zur Bewegung eines Bearbeitungswerkzeuges mit variablem Hub und variabler Frequenz.

Erfindungsgemäss wird dabei die Tourenzahl pro Zeiteinheit beider Motoren relativ zu einander elektronisch, entsprechend dem Bearbeitungsmuster gesteuert.

Eine wichtige Verwendung ist dabei die Feinst-Nachbearbeitung von Kolben für Verbrennungsmotoren. Diese werden nämlich nach einem bestimmten Bearbeitungsmuster nachbearbeitet. Ihre ursprünglich rein zylindrische Form wird beispielsweise in eine leicht bombierte und zugleich unrunde Form umgewandelt. Findet diese Feinst-Nachbearbeitung auf einer Drehbank statt, muss der Drehstahl bei jeder Umdrehung des Werkstückes um einen geringen Weg hin- und herbewegt werden. Bei einer solchen Feinst-Nachbearbeitung beträgt der Hub des Drehstahls zwischen 0,1 bis 1 mm. Die Bewegung muss aber genau synchron mit der Tourenzahl des zu bearbeitenden Werkstückes erfolgen. Ein solches Feinst-Nachbearbeitungsmuster, das synchron zur Tourenzahl des Werkstückes verläuft lässt sich durch eine elektronische Steuerung der Tourenzahl der Motoren M1 und M2 der Antriebsvorrichtung erzielen. Das Bearbeitungsmuster kann beispielsweise auf Band, elektronisch gespeichert werden. Die Traverse 27 trägt dann einen Diamanten bestückten Drehstahl D.

Bei einer solchen Steuerung werden die beiden Motoren in gleicher Drehrichtung mit gleicher Tourenzahl getrieben und die elektronische Steuerung bewirkt jeweils eine ganz geringe Drehzahländerung eines der beiden Motoren. Je nachdem die Drehzahl erhöht oder herabgesetzt wird bewegt sich die Traverse 27 vorwärts oder zurück.

Die Antriebsvorrichtung mit zwei Motoren hat gegenüber anderen Antriebsvorrichtungen den grossen Vorteil, dass bei jeder Bewegung der Traverse die volle Antriebskraft zur Verfügung steht, da ja beide Motoren mit nahezu normaler Drehzahl und daher voller Leistung betrieben werden.

Da der Vorschub spielfrei und doch mit möglichst geringer Reibung arbeiten soll, kann die Mutter 10 als Kugel-Umlaufmutter ausgebildet sein. Die Führungsstangen 26 des Schlittens können durch Manchetten gegen Staub geschützt sein.

Statt die Motoren wie bei Figur 1 achsial aufeinander auszurichten, können Sie nebeneinander angeordnet werden, wie dies Figur 2 zeigt. Hier ist die Mutter 30 achsial fest aber drehbar im Gehäuse G, gelagert und mit einer Zahnriemenscheibe 31 verbunden, die dem Motor M1 erlaubt die Mutter anzutreiben. Der Motor M1 ist dazu mit einer Zahnriemenscheibe 32 versehen und treibt mittels des Zahnriemens 33 die Mutter 30.

Motor M2 treibt mit Hilfe eines Kupplungsorgans 41 die Schraubspindel 40. Der Aufbau des Kupplungsorgans 41 entspricht demjenigen des oben beschriebenen Kupplungsorgans 21. Die Schraubspindel führt mit einem glatten Spindelteil 42 nach Aussen und bewegt mittels eines Axiallagers 43 einen Schlitten 44 der an den ausserhalb des Gehäuses angebrachten Führungsstangen 45 geführt ist.

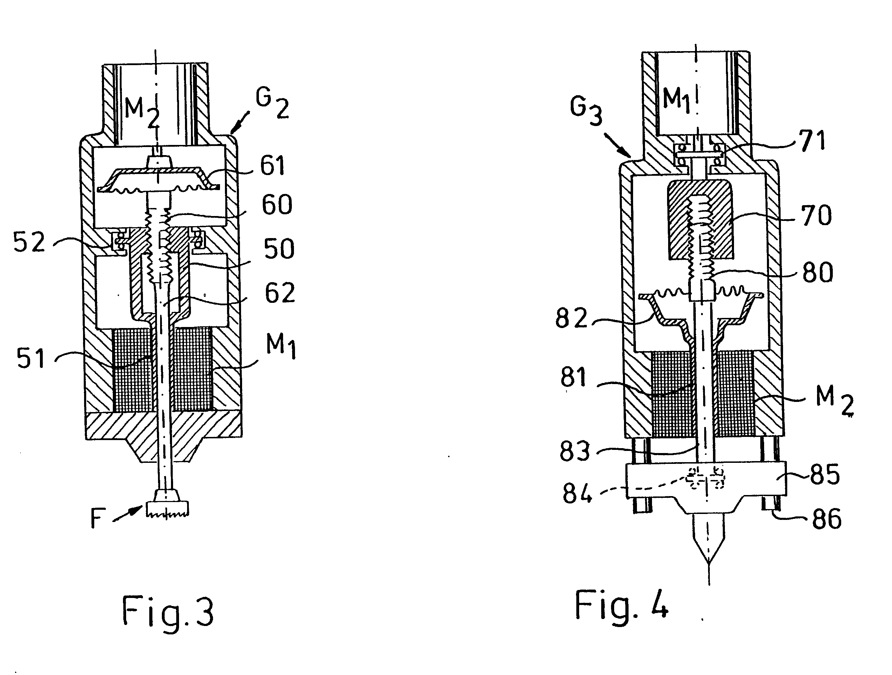

Die Figuren 3 und 4 zeigen zwei weitere Varianten einer Linear-Antriebsvorrichtung, bei denen der glatte Spindelteil der Schraubspindel durch die Hohlwelle eines der beiden Motoren nach Aussen geführt ist. Die Kreuzschraffur deutet an, dass der Motor im Schnitt dargestellt ist.

Bei der Antriebsvorrichtung nach Figur 3 treibt Motor M2 über die Kupplung 61 die Schraubspindel 60 deren glatter Teil 62 durch die Hohlwelle 51 des Motors M2 nach Aussen geführt ist.

Motor M2 treibt mit Hilfe seiner Hohlwelle 51 die Mutter 50, die bei 52 achsial fest aber drehbar gelagert ist. In diesem Ausführungsbeispiel ist am äusseren Ende der Spindel als Bearbeitungswerkzeug statt eines Drehstahles ein Fräskopf F angeordnet. Dies vereinfacht den Aufbau, weil dadurch das zusätzliche Achsiallager des Schlittens und dessen Führungen entfallen.

Findet kein Vorschub des Fräskopfes statt, rotieren beide Motoren M1 und M2 mit genau gleicher Tourenzahl. Ein Vorschub oder ein Zurückziehen des Fräskopfes F wird durch geringfügiges Erhöhen oder Herabsetzen der Tourenzahl eines der beiden Motoren erzielt. Das heisst also, dass nur beim jeweiligen Vorschub oder beim Zurückziehen des Fräskopfes eine geringe Drehung der Spindel 62 relativ zur Hohlwelle 51 erfolgt.

Die Antriebsvorrichtung nach Figur 4 unterscheidet sich von derjenigen nach Figur 3 dadurch, dass hier der Motor M2 der die Spindel 80 mit Hilfe einer Hohlwelle 81 und einem Kupplungsorgan 82 treibt. Motor M1 treibt die Mutter 70, die mit Hilfe des Lagers 71 achsial fest gelagert ist. Der glatte Spindelteil 83 durchsetzt die Hohlwelle 81 und verschiebt den Schlitten 85 mittels eines darin angeordneten Achsiallagers 84. Der Schlitten 85 ist auf den Führungsstangen 86 gleitend gelagert.

Es dürfte klar sein, dass die Spindel 83 wie bei der Antriebsvorrichtung nach Figur 3 statt einen Schlitten zu bewegen, auch mit einem Fräswerkzeug versehen sein könnte. Dasselbe gilt auch für die Antriebsvorrichtung nach Figur 2.

## Patentansprüche

1. Linear-Antriebsvorrichtung mit zwei relativ zueinander fest angeordneten Motoren, von denen der eine eine Mutter, der andere eine Schraubspindel antreibt, wobei die von dem einen Motor (M1) angetriebene Mutter (10, 30, 50, 70) axial fest gehalten ist, während der andere Motor (M2) die Schraubspindel (20, 40, 60, 80) mit Hilfe eines drehfesten, aber axial verschiebbaren Kupplungsorgans (21, 41, 61, 82) antreibt, dadurch gekennzeichnet, dass das Kupplungsorgan (21, 41, 61, 82) einen starren Antriebsteil (22) und eine mit demselben verbundene, als Abtriebsteil dienende Membran (23) umfasst.

2. Linear-Antriebsvorrichtung nach Anspruch 1, dadurch gekennzeichnet, dass Mittel vorgesehen sind, welche die rotierende Bewegung der Schraubspindel (20, 40, 60, 80) in eine lineare, nicht rotierende Vorschubbewegung eines ausserhalb des Bereiches der beiden Motoren (M1, M2) angebrachten Antriebsorgans (27 ; 44 ; 85) umsetzen.

3. Antriebsvorrichtung nach Anspruch 2, dadurch gekennzeichnet, dass die Mittel einen Schlitten umfassen (25 ; 44 ; 85) der mittels Stangen (26 ; 45 ; 86) und eines Achsiallagers (24 ; 43 ; 84) gleitend geführt ist und das Antriebsorgan (27 ; 44 ; 85) bewegt.

4. Antriebsvorrichtung nach Anspruch 1, mit achsial aufeinander ausgerichteten Motoren (M1, M2) von denen einer eine Hohlwelle hat, dadurch gekennzeichnet, dass der glatte Teil (62 ; 83) der vom Motor (M2) getriebenen Schraubspindel durch die Hohlwelle (51 ; 81) des anderen Motors (M1) nach aussen geführt ist.

5. Antriebsvorrichtung nach Anspruch 4, dadurch gekennzeichnet, dass die Schraubspindel (60) durch die Hohlwelle (51) des die Mutter treibenden Motors (M1) hindurchgeführt ist.

6. Antriebsvorrichtung nach Anspruch 4, dadurch gekennzeichnet, dass die Schraubspindel (80) durch die Hohlwelle (81) des sie treibenden Motors (M2) hindurch geführt ist.

7. Antriebsvorrichtung nach Anspruch 1, dadurch gekennzeichnet, dass die axial fest gelagerte Mutter (30) von einem daneben angeordneten Motor (M1) mittels eines Riemens (33), einer Kette oder Zahnrädern getrieben wird, und dass die Spindel (40) durch die Mutter hindurch nach aussen geführt ist.

8. Verwendung der linearen Antriebsvorrichtung nach Anspruch 1 bei einer Werkzeugmaschine zur Bewegung eines Bearbeitungswerkzeuges (D ; F) mit variablem Hub und variabler Frequenz, dadurch gekennzeichnet, dass die Tourenzahl pro Zeiteinheit beider Motoren relativ zu einander elektronisch, entsprechend dem Bearbeitungsmuster gesteuert wird.

## Claims

1. Linear drive device with two motors, firmly arranged relative to each other, one driving a nut, the other driving a screw spindle, whereby the nut (10, 30, 50, 70) driven by one of the motors (M1) is mounted axially firmly, whereas the other motor (M2) drives the screw spindle (20, 40, 60, 80) by means of a non-rotatable but axially movable coupling element (21, 41, 61, 82), characterized by the fact that said coupling element (21, 41, 61, 82) comprises a rigid driving part (22) and a membrane (23) serving as power take-off part connected therewith.

2. Linear drive device according to claim 1, characterized by the fact that means are provided which convert the rotating movement of the screw spindle (20, 40, 60, 80) into a linear, nonrotating movement of a driving element (27 ; 44 ; 85) disposed outside the range of said two motors (M1, M2).

3. Linear drive device according to claim 2, characterized by the fact that said means comprise a sled (25 ; 44 ; 85) which is glidingly guided by means of bars (26 ; 45 ; 86) and an axial bearing (24 ; 43 ; 84) and which moves the driving element (27 ; 44 ; 85).

4. Linear drive device according to claim 1 with said two motors (M1, M2) being axially aligned, one of them having a hollow shaft, characterized by the fact that the smooth part (62 ; 83) of said screw spindle driven by motor (M2) is led through said hollow shaft (51 ; 81) of the other motor (M1) to the exterior.

5. Linear drive device according to claim 4, characterized by the fact that said screw spindle (60) is led through said hollow shaft (51) of said motor (M1) driving said nut.

6. Linear drive device according to claim 4, characterized by the fact that said screw spindle (80) is led through said hollow shaft (81) of its driving motor (M2).

7. Linear drive device according to claim 1, characterized by the fact that said axially firmly mounted nut (30) is driven by a motor (M1) arranged next to it by means of a belt (33), a chain or a toothed wheel and that said screw spindle (40) is led through said nut to the exterior.

8. Use of the linear drive device according to claim 1 in a machine tool for movement of a working tool (D ; F) with variable stroke and variable frequence, characterized by the fact the number of revolutions per time unit of both said motors are controlled electronically relatively to each other, according to the working pattern.

## Revendications

1. Dispositif d'entraînement linéaire avec deux moteurs disposés de manière fixe l'un par rapport à l'autre, dont l'un entraîne un écrou et l'autre une tige filetée, l'écrou (10, 30, 50, 70) entraîné par l'un des moteurs (M1) étant maintenu fixe axialement, tandis que l'autre moteur (M2) entraîne la tige filetée (20, 40, 60, 80) au moyen d'un organe d'accouplement (21, 41, 61, 82) fixe en rotation mais déplaçable axialement, caractérisé en ce que l'organe d'accouplement (21, 41, 61, 82) comprend une pièce d'entraînement rigide (22) et une membrane (23) reliée à celle-ci et jouant le rôle de pièce entraînée.

2. Dispositif d'entraînement linéaire suivant la revendication 1, caractérisé en ce qu'on a prévu des moyens qui transforment le mouvement de rotation de la tige filetée (20, 40, 60, 80) en un mouvement d' avancement linéaire, sans rotation, d'un organe d'entraînement (27 ; 44 ; 85) adapté à l'extérieur de la région des deux moteurs (M1 et M2).

3. Dispositif d'entraînement suivant la revendication 2, caractérisé en ce que les moyens comprennent un chariot (25 ; 44 ; 85) qui est guidé à coulissement au moyen de barres (26 ; 45 ; 86) et d'un palier axial (24 ; 43 ; 84) et qui meut l'organe d'entraînement (27 ; 44 ; 85).

4. Dispositif d'entraînement suivant la revendication 1, avec des moteurs (M1 et M2) alignés axialement l'un sur l'autre, dont l'un a un arbre creux, caractérisé en ce que la partie lisse (62 ; 83) de la tige filetée entraînée par le moteur (M2) est guidée vers l'extérieur par l'arbre creux (51 ; 81) de l'autre moteur (M1).

5. Dispositif d'entraînement suivant la revendication 4, caractérisé en ce que la tige filetée (60) passe à travers l'arbre creux (51) du moteur (M1) qui entraîne l'écrou.

6. Dispositif d'entraînement suivant la revendication 4, caractérisé en ce que la tige filetée (80) est guidée à travers l'arbre creux (81) du moteur (M2) qui l'entraîne.

7. Dispositif d'entraînement suivant la revendication 1, caractérisé en ce que l'écrou (30) monté immobile axialement est entraîné par un moteur (M1) disposé à côté de lui, au moyen d'une courroie (33), d'une chaîne ou de roues dentées, et en ce que la tige (40) est guidée vers l'extérieur à travers l'écrou.

8. Emploi du dispositif d'entraînement linéaire suivant la revendication 1 dans une machine-outil pour le déplacement d'un outil d'usinage (D ; F) à course variable et à fréquence variable, caractérisé en ce que le nombre de tours par unité de temps des deux moteurs l'un par rapport à l'autre est commandé électroniquement de manière correspondant au modèle d'usinage.

Fig.2

Fig.1

M₁  M₂  G₁  41  31  30  40  42  44  45  43  33  32

M₁  M₂  G  11  10  20  24  23  22  26  25  21  27  D

Fig. 4

Fig. 3